# EUROPEAN PATENT APPLICATION

(11) **EP 2 400 366 A2**
(43) Date of publication of application: **28.12.2011**
(21) Application number: 11169268.7
(22) Date of filing: 09.06.2011
(51) Int. Cl.: G06F 1/16

(54) **Bag with integrated portable display device**

(30) Priority: 25.06.2010 TW 099120803
(71) Applicant: Hannspree, Inc., New Taipei City 248 (TW)
(72) Inventor: Hwang, Shao-Yu, Taipei City 106 (TW)
(74) Representative: HOFFMANN EITLE

(57) **Abstract**

The present invention provides a portable display device having a storage function, comprising a baggy body (100) having four flanks (110) and a bottom surface (120). The four flanks (110) are connected to the bottom surface (120) to form an accommodation space (130), and the four flanks (110) are connected to form an opening part (140). At least one handle (300) is disposed on the opening part (140) of the baggy body (100). At least one flexible wire (142) is installed in the opening part (140) to allow an opening and closing of the opening part (140). A display (200) is disposed on the baggy body (100).

## Description

### FIELD OF THE INVENTION

The present invention relates to a portable display device, and more particularly to an angle-adjustable portable display device having a storage function.

### BACKGROUND OF THE INVENTION

With the rapid development in technologies, human life quality is improved consequently. The conventional large size Cathode Ray Tube (CRT) displays have been gradually replaced by today's thin liquid crystal displays (LCDs). Among others, portable LCD displays allow the user to enjoy good audio-visual experience at any time and any place, and are therefore most widely welcomed and accepted.

Conventional notebooks and portable video players have a reduced weight and an improved portability if compared with desktop computers. However, the notebook still requires peripheral electronic products, such as power cables, mouse or touchpad and so on. In a usual situation, users have to carry a bag of computer peripheral electronic products, and also need to carry devices according to users' individual needs, such as cell phone, wallet, cosmetic case, umbrella, etc..

In fact, when in a business engagement, traveling outside and even participating in a meeting, the personal supplies and file data are essential elements. Therefore, there is a need to provide a portable display device with a convenient storage function.

### SUMMARY OF THE INTENTION

In accordance with the problems noted above, the present invention provides a portable display device having a storage function.

The present invention provides a portable display device comprising the features of claim 1. Preferred optional features are recited in the dependent claims.

The portable display device having the storage function according to the present invention allows the user to carry their belongings with them, using the accommodation space of the baggy body. Furthermore, the portable display device of the present invention provides a flexible angle-adjusting function due to the flexible wire of the baggy body.

### BRIEF DESCRIPTION OF THE DRAWINGS

The foregoing aspects, as well as many of the attendant advantages and features of the present invention will become more apparent by reference to the following detailed description, when taken in conjunction with the accompanying drawings, wherein:
FIG. 1 is a perspective view of the portable display device with a storage function according to a preferred embodiment of the present invention;
FIG. 2 is another perspective view of the portable display device with a storage function according to a preferred embodiment of the present invention;
FIG. 3 is a perspective view of the portable display device with a storage function in a first position;
FIG. 4 is a perspective view of the portable display device with a storage function in a second position;
FIG. 5 is a perspective view of the portable display device with a storage function according to another preferred embodiment of the present invention in the first position; and
FIG. 6 is perspective view of the portable display device with a storage function according to another preferred embodiment of the present invention in the second position.

### DETAILED DESCRIPTION OF THE PREFERRED EMBODIMENTS

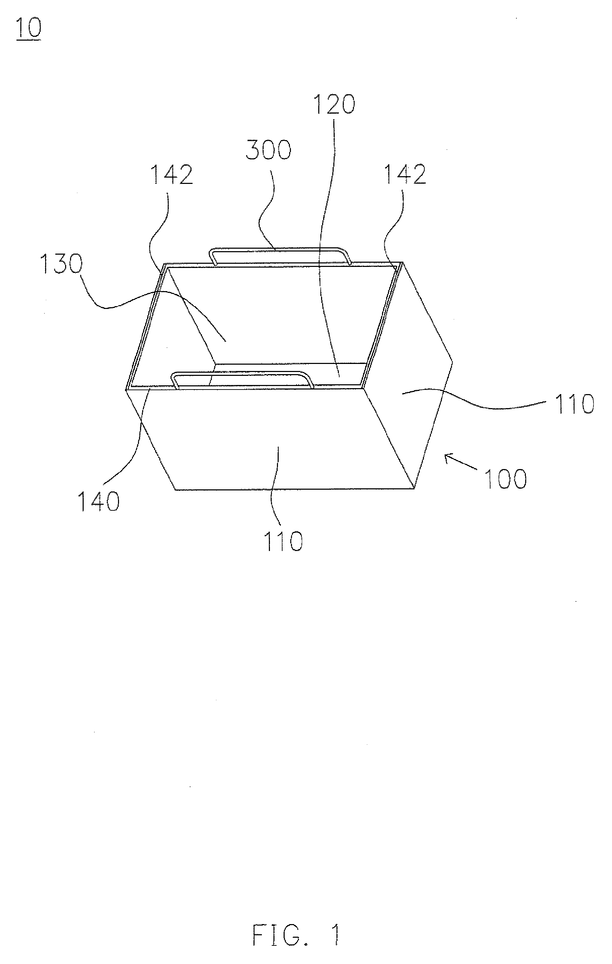

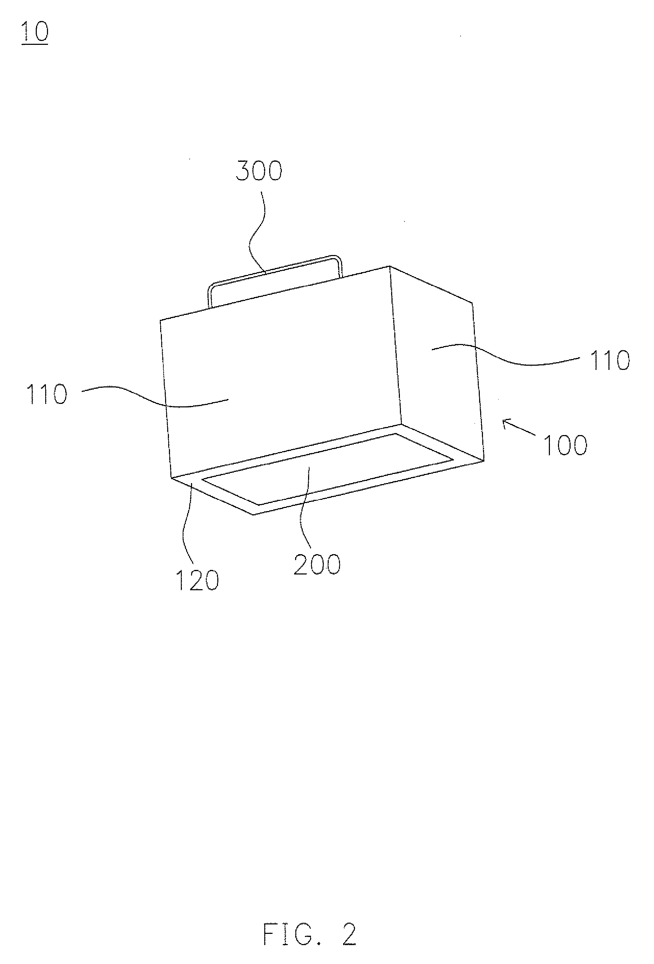

Referring to Figs. 1 and 2, a portable display device 10 having a storage function in accordance with the present invention comprises a baggy body 100, a display 200 and at least one handle 300.

The baggy body 100 has four flanks 110 and a bottom surface 120. The four flanks 110 are connected to each other, and the bottom surface 120 is connected with one end of each of the four flanks 110. In this embodiment, the bottom surface is connected thereto in a fastening manner. However, it could also be connected in a pivoting manner. The respective other ends of the four flanks 110 are connected to each other so as to form an opening part 140, so that the four flanks 110 connected to the bottom surface 120 form an accommodation space 130 of the baggy body 100. The accommodation space 130 can store the personal belongings and the peripheral electronic products, such as cell phone, wallet, keyboard, mouse, etc.

A flexible wire 142 is installed in the circumferential edge of the opening part 140, and the flexible wire 142 can be flexing into various shapes so as to allow the opening part 140 to open or close. The flexible wire 142 may also be a convoluted bellows or a steel wire.

In this embodiment, the display 200 is disposed on the bottom of the bottom surface 120. The display 200 can be a flexible display, a touch sensitive display, a flat panel display or a tablet PC.

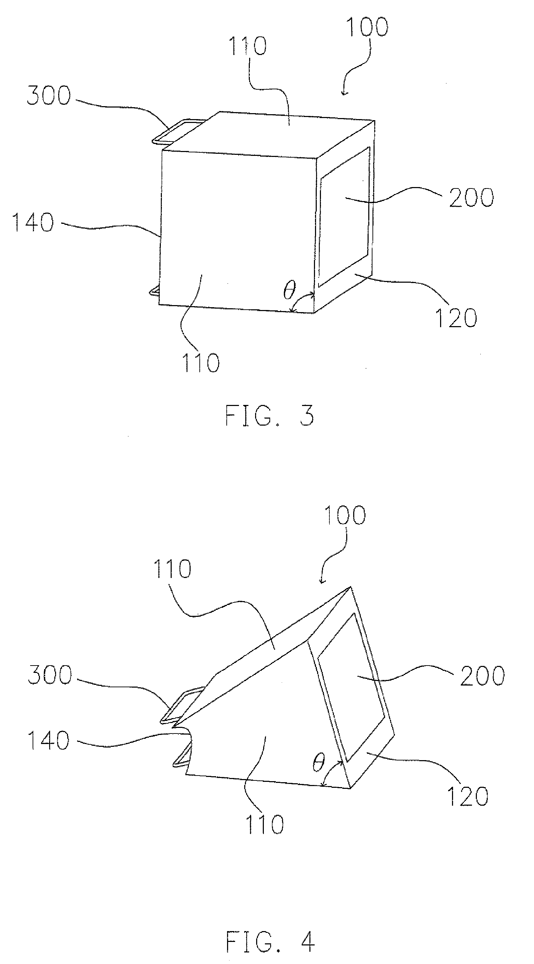

Referring to Figs. 3 and 4, when the user goes out, the baggy body 100 is like an ordinary bag, and the baggy body 100 has a corresponding storage function. When the user needs to use the display 200, the user can place the bottom surface 120 with the display 200 vertically to the underlying plane (as Fig. 3 shows). When there is a need to adjust the angle of the display, the user can simply adjust the flexible wire 142 in the opening part 140. The flexible wire 142 of the opening part 140 keeps the baggy body 100 in shape, and can also control the opening part 140 to open or close. Because the flanks 110 and the bottom surface 120 are fixed, when the opening part 140 is closed in the vertical plane, an angle θ between the bottom surface 120 and the flanks 110 on the plane changes, and the baggy body 100 is formed into an isosceles triangle state. Thus, the angle θ can be adjusted so that the user can view the display 200 at a comfortable angle.

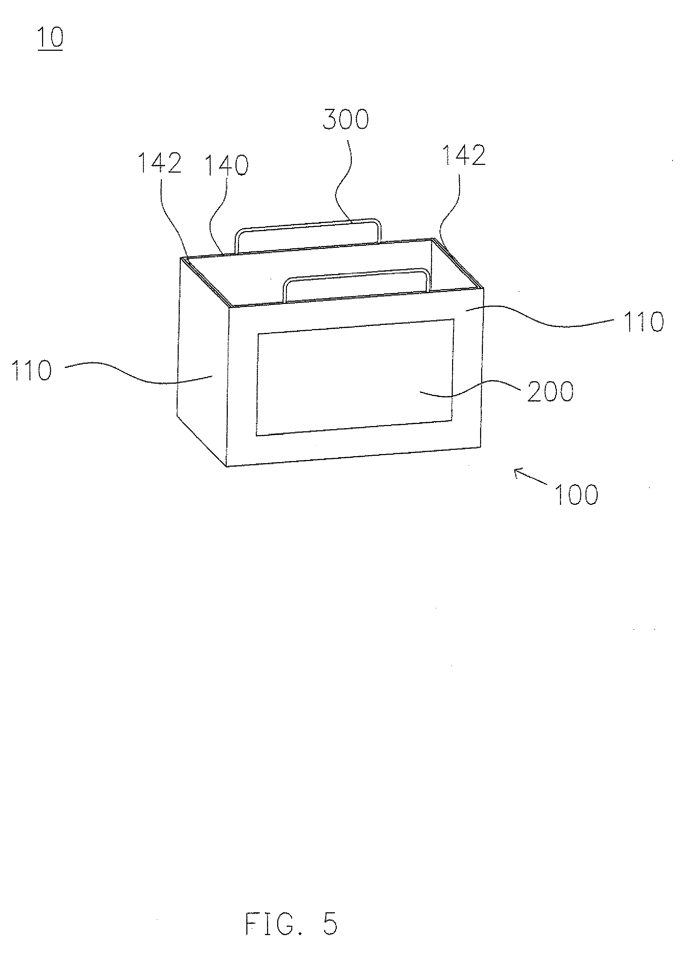

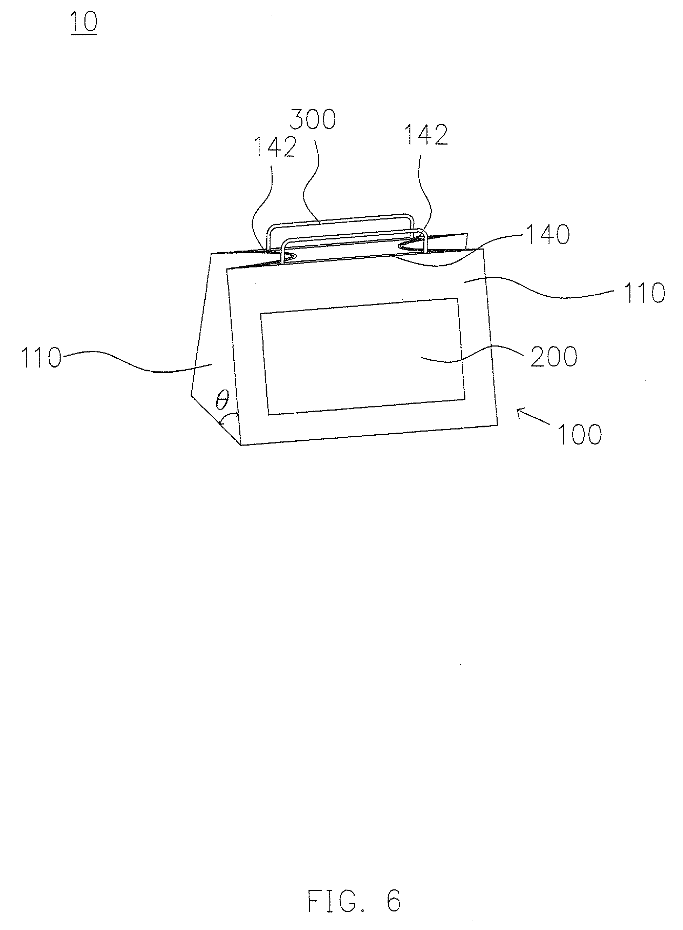

Figs. 5 and 6 illustrate a second embodiment of the portable display device having a storage function of the present invention. The display 200 of the present embodiment of the invention is installed on one of the flanks 110 of the baggy body 100. When the user goes out, the accommodation space 130 of the baggy body 100 can store the personal belongings and the peripheral electronic products, such as cell phone, wallet, keyboard, mouse, etc. The display 200 on one of the flanks 110 of the baggy body 100 can show a personal favorite pattern, and the pattern can change in accordance with the personal feelings at any time, so that the baggy body 100 becomes more individualized, and the display 200 can even be used for advertising in business.

Referring to Fig. 6, when the user needs to use the display 200, the user can place the baggy body 100 erectly on the underlying plane and adjusts the opening part 140. Thus, the angle θ between the display 200 on one of the flanks 110 of the baggy body 100 and the plane can be adjusted, and the user can view the display 200 at a comfortable angle.

The present invention has been described with reference to preferred embodiments thereof, and it is understood that many changes and modifications in the described embodiments can be carried out without departing from the scope of the invention, as it is defined by the appended claims.

## Claims

1. A portable display device having a storage function, comprising a baggy body (100) having four flanks (110) and a bottom surface (120), wherein
the four flanks (110) are connected to the bottom surface (120) to form an accommodation space (130), and the four flanks (110) are connected to form an opening part (140);
at least one handle (300) is disposed on the opening part (140) of the baggy body (100);
at least one flexible wire (142) is installed in the opening part (140) to allow an opening and closing of the opening part (140); and
a display (200) is disposed on the baggy body (100).

2. The portable display device as claimed in claim 1, wherein the display (200) is installed on the bottom surface (120) of the baggy body (100).

3. The portable display device as claimed in claim 1, wherein the display (200) is installed on one of the flanks (110) of the baggy body (100).

4. The portable display device as claimed in any one of claims 1 to 3, wherein the baggy body (100) is made of fabric or textile material.

5. The portable display device as claimed in any one of claims 1 to 3, wherein the baggy body (100) is made of plastics material.

6. The portable display device as claimed in any one of claims 1 to 3, wherein the baggy body (100) is made of a paper-type material.

7. The portable display device as claimed in any one of claims 1 to 6, wherein the four flanks (110) are connected to the bottom surface (120) in a fastening manner.

8. The portable display device as claimed in any one of claims 1 to 6, wherein the four flanks (110) are connected to the bottom surface (120) in a pivoting manner.

9. The portable display device as claimed in any one of claims 1 to 8, wherein the flexible wire (142) is a steel wire.

10. The portable display device as claimed in any one of claims 1 to 8, wherein the flexible wire (142) is a convoluted bellows.

11. The portable display device as claimed in any one of claims 1 to 10, wherein the display (200) is a flexible display, a touch display, a flat panel display or a tablet PC.
